# EUROPEAN PATENT APPLICATION

(11) **EP 1 488 902 A1**
(43) Date of publication of application: **22.12.2004**
(21) Application number: 04014093.1
(22) Date of filing: 16.06.2004
(51) Int. Cl.: B29B 17/00, B29B 9/00, B09B 3/00, C04B 16/04, C04B 18/02, B29B 13/10

(54) **Method for producing a densified plastic material starting from waste plastic material**

(30) Priority: 18.06.2003 IT MI20031230
(71) Applicant: Rebai, Paolo, 22100 Como (IT)
(72) Inventor: Rebai, Paolo, 22100 Como (IT)
(74) Representative: Modiano, Guido, Dr.-Ing.

(57) **Abstract**

A method for producing a densified material starting from waste plastics, whose particularity consists in that it comprises the steps of:
melting together heterogeneous waste plastics or post-consumer plastics;
obtaining a uniform paste devoid of paints and/or coloring agents;
reducing the homogeneous paste into granules or flakes that are degassed.

## Description

The present invention relates to a method for producing densified plastic material starting from waste plastics or post-consumer plastics.

More particularly, the invention relates to a method for producing a densified plastic material starting from waste plastics that is adapted to produce an additive to be used to make modified concrete, tarmacs, mortar and the like or to be used as a replacement of sand.

As is known, one of the effects of plastics recycling is the accumulation of waste plastics, which can comprise plastic material as well as other materials such as cardboard, wood, glass, inert materials, various metals and the like, which originate from industrial activities or from sorting of the materials originating from sorted waste collection.

The treatment of waste plastics is one of the most strongly felt problems at present, since the optimum situation would be to be able to recycle completely all the waste so as to be able to substantially reuse 100% of the waste and therefore greatly reduce the environmental impact that such waste has even if it is burned or disposed of in a landfill.

Waste plastics is currently recycled by melting together plastics of the same type, and it is therefore imperative to be able to group plastics waste by different type, so as to be able to then have uniform batches of plastics that can accordingly be melted to be subsequently recycled.

The fact of having to melt homogeneous plastics is of course a drawback, since it is necessary to select and separate the waste plastics before being able to proceed with the densification process.

Currently, unsorted heterogeneous plastics are not recycled, or are recycled with disadvantageous methods; accordingly, they are predominantly deposited in landfills.

The aim of the present invention is to provide a method for producing a densified material starting from waste plastics that allows to use heterogeneous waste plastics, accordingly greatly simplifying the steps preceding the densification process.

Within this aim, an object of the present invention is to provide a method for producing a densified material starting from waste plastics that can be used as an additive for concretes, tarmacs and the like or as a replacement of sand.

Another object of the present invention is to provide a method for producing a densified material starting from waste plastics that does not require steps of washing and drying by means of a centrifuge.

Another object of the present invention is to provide a method for producing a densified material starting from waste plastics that optimizes production times and resources with respect to methods known in the field of plastics recycling and can be used fully or partly as a replacement of sand and coarse sand in their various uses.

This aim and these and other objects that will become better apparent hereinafter are achieved by a method for producing a densified material starting from waste plastics, characterized in that it comprises the steps of:
melting together heterogeneous waste plastics or post-consumer plastics;
obtaining a uniform paste devoid of paints and/or coloring agents;
reducing said homogeneous paste into granules or flakes that are degassed.

Further characteristics and advantages of the invention will become better apparent from the description of a preferred but not exclusive embodiment of the method according to the invention.

The method according to the present invention provides for a step for melting waste or post-consumer plastics of heterogeneous types without any preventive treatments except from reduction to specified dimensions.

The plastics can comprise other materials, such as paper, cardboard and the like.

The melting of heterogeneous waste plastics produces a degassed homogeneous paste, and the melting process causes any paints and coloring agents in general to become volatile in the form of gas, therefore allowing to eliminate them from the homogeneous paste, so as to obtain a paste that has constant characteristics, without air bubbles.

At this point, the homogeneous polymeric densified paste is subjected to a subsequent milling treatment, which produces flakes of degassed material, i.e., material without air pockets.

Such flakes of material constitute an additive that can be advantageously used as a weight-reducing material for mixtures of concrete, mortars and the like, as an additive for tarmacs and the like, or for example as a material for reducing the weight of hollow or solid prefabricated blocks made of concrete, which are used to build dividing walls, including rather substantial dividing walls, or to produce concrete structures such as pits, drains, kerbs, ducts, et cetera.

In general, the recycled plastics flakes or granules obtained by means of the method according to the present invention are therefore used in the field of construction, particularly as a material for reducing the weight of concrete, mixed with different percentages, in order to improve the fire resistance (REI = 180 minutes) of bricks, walls and floors.

The recycled plastics granules or flakes obtained by means of the method according to the present invention can be used as they are for filling, with thermal and/or acoustic insulation purposes (for example in panels or in skylight wells or between walls), or for covering and protecting structures and piping.

As is known, concrete is obtained with a component constituted by screened sand, coarse sand or gravel. The additive obtained by means of the method according to the present invention allows to obtain plastics granules having different particle sizes, which can therefore be used as replacements for fine sand, coarse sand or gravel in concrete mixtures or in preparing mortars for plasters and screeds.

The weight reduction material used in concrete does not compromise its mechanical strength properties within a certain degree, but has the advantage of allowing a reduction in the specific gravity of the material, so as to obtain lighter structures.

Advantageously, the densification process according to the present invention occurs entirely without electric resistors for melting the plastics before extrusion. The heat required for the process is produced exclusively by the mechanical friction generated by pressure and by the friction of the material within the extrusion chamber against a front plate and through an extrusion die.

The recycled plastic material obtained by means of the method according to the present invention is distinctly cheaper than the additives normally used in concretes and/or tarmacs.

Accordingly, it is extremely advantageous to use the densified material obtained with the method according to the invention as a weight reduction material for concretes and the like and as a replacement of sand, coarse sand and gravel.

Furthermore, the use of the material cited above allows to obtain thermal and acoustic insulation properties at a lower cost.

In practice it has been observed that the method according to the present invention fully achieves the intended aim and objects, since it allows to obtain a densified material that is adapted to constitute an additive to be used in concretes, tarmacs and the like.

The method thus conceived is susceptible of numerous modifications and variations, all of which are within the scope of the inventive concept; all the details may further be replaced with other technically equivalent elements.

In practice, the materials used, so long as they are compatible with the specific use, as well as the contingent shapes and dimensions, may be any according to requirements and to the state of the art.

The disclosures in Italian Patent Application no. MI2003A001230, from which this application claims priority, are incorporated herein by reference.

## Claims

1. A method for producing a densified material starting from waste plastics, **characterized in that** it comprises the steps of:
melting together heterogeneous waste plastics or post-consumer plastics;
obtaining a uniform paste devoid of paints and/or coloring agents;
reducing said homogeneous paste into granules or flakes that are degassed.

2. The method according to claim 1, **characterized in that** the heat required for the process is produced by mechanical friction generated by pressure and friction of said material within an extrusion chamber.

3. The method according to claim 1, **characterized in that** said waste or post-consumer plastics are fed directly to the melting treatment without prior treatment.

4. The densified material provided by means of the method according to one or more of the preceding claims, **characterized in that** it comprises heterogeneous waste plastics melted together.

5. The use of the material according to claim 4 as an additive for concretes.

6. The use of the material according to claim 4 as an additive for tarmacs.

7. The use of the material according to claim 4 as an additive for concrete blocks known as "bolognini" (squared stone blocks).

8. The use of the material according to claim 4 as a thermoacoustically insulating element for walls and the like.

9. The use of the material according to claim 4 as a replacement of sand, coarse sand and gravel.
